# EUROPEAN PATENT SPECIFICATION

(11) **EP 2 469 854 B1**
(45) Date of publication and mention of the grant of the patent: **10.10.2018**
(21) Application number: 10809704.9
(22) Date of filing: 05.08.2010
(51) Int. Cl.: H04N 21/436, H04N 21/4402, H04N 21/2743, H04N 21/478, H04N 21/658

(54) **CONTENT UPLOADING SYSTEM, CONTENT UPLOADING METHOD, AND CONTENT TRANSMITTING/RECEIVING DEVICE**
INHALTSHOCHLADESYSTEM, INHALTSHOCHLADEVERFAHREN UND INHALTSSENDE-/EMPFANGSVORRICHTUNG
SYSTÈME DE TÉLÉVERSEMENT DE CONTENU, PROCÉDÉ DE TÉLÉVERSEMENT DE CONTENU ET DISPOSITIF DE TRANSMISSION/RÉCEPTION DE CONTENU

(30) Priority: 19.08.2009 JP 2009189781
(43) Date of publication of application: 27.06.2012
(73) Proprietor: Panasonic Corporation, Kadoma-shi Osaka 571-8501 (JP)
(72) Inventor: TAKAGAKI, Keiichi, Chuo-ku, Osaka 540-6207 (JP); MIYAKE, Yasushi, Chuo-ku, Osaka 540-6207 (JP); YAMAMURA, Toshiki, Chuo-ku, Osaka 540-6207 (JP); MATSUNAGA, Shigeki, Chuo-ku, Osaka 540-6207 (JP)
(74) Representative: Grünecker Patent- und Rechtsanwälte PartG mbB
(86) International application number: PCT/JP2010/004930
(87) International publication number: WO 2011/021356

(56) References cited:
- EP-A1- 1 408 686
- EP-A1- 2 028 858
- EP-A1- 2 053 610
- JP-A- 2006 202 353
- JP-A- 2007 306 258
- JP-A- 2008 530 938
- US-A1- 2005 122 992
- US-A1- 2007 110 400
- Anonymous: "Canon HG10 AVCHD Camcorder: Video Transfers | 37prime", , 20 January 2008 (2008-01-20), XP055396127, Retrieved from the Internet: URL:https://37prime.wordpress.com/2008/01/ 20/canon-hg10-avchd-camcorder-video-transf ers/ [retrieved on 2017-08-04]

## Description

The present invention relates to content uploading systems, content uploading methods, and content transmitting/receiving devices, and more particularly to technology suitable for uploading a required content stored in a content transmitting device with content uploader function over a network to a content receiving device such as digital media server.

DLNA (Digital Living Network Alliance) is an industry association promoting standardization for mutual connection of electric home appliances and personal computers of different manufacturers. DLNA guidelines specified by DLNA provide a function for remote-viewing and remote-listening of contents by mutually connecting a digital media player and a digital media server via a network and allowing the digital media player to obtain content data from the digital media server. The DLNA guidelines also specify an uploader function for uploading contents to the digital media server. This enables a device with uploader function to upload contents to the digital media server, and view the contents from the digital media player.

For example, a system configuration when a digital media player has an uploader function is disclosed (for example, see PTL1). The device with uploader function does not necessarily be a digital media player. It can be an independent device for simply storing and uploading contents. A device for receiving and storing contents from the device with uploader function does not necessarily be a digital media server. It can be a device that has only a function for storing received contents. Received contents may be stored at anywhere, including HDD (Hard Disk Drive), BD (Bluray Disc), and flash memory. The device may also have a function for playing back stored contents. In the description below, a device with uploader function is called a content transmitting device, and a device with function for receiving and storing contents is called a content receiving device.

On the other hand, video cameras conforming to AVCHD (Advanced Video Codec High Definition) standard and information processing devices conforming to BD standard are known of technology to generate playlist, clip information, and audiovisual stream in a form that can be played back seamlessly on recording the contents (for example, see PTL 2). In other words, contents are recorded and recorded contents are edited in a format that allows seamless playback. Multiple audiovisual streams can be successively played back by one playlist. In this case, audiovisual stream is data in MPEG (Moving Picture Experts Group) 2-TS (Transport Stream) format.

However, in the system configuration of aforementioned PTL1, content must be formed of a single audiovisual stream. Therefore, uploading of content when one playlist includes multiple pieces of audiovisual stream data, i.e., when multiple pieces of audiovisual stream data form the content, is not presupposed in the system configuration of PTL 1. In other words, PTL 1 does not take into account about a method of uploading, from the content transmitting device to the content receiving device, stream data consisting of multiple pieces of audiovisual stream data that may be created by an information processing device in above PTL 2.

To solve the above disadvantage, integrated stream data may be transmitted as pseudo single stream data by inserting DIT (Discontinuity Information Table) for designating a discontinuity point in MPEG2-TS stream at the side of the content transmitting device, and this is received by the content receiving device. In this case, however, the content receiving device needs to regenerate information equivalent to playlist and clip information from received stream data in order to play back received data or store it in BD. To regenerate playlist and clip information, the entire stream needs to be analyzed. This increases processing task of a digital media server receiving data. Uploading performance (transmission rate) will also decrease. Furthermore, information that cannot be regenerated from the stream, including information required for seamless playback at discontinuity point and chapter information, will be lost.

Further examples for the transmission or upload of data can be found in PTL 3 and PTL 4. Information on AVCHD in connection with the Canon HG10 AVCHD Camcorder can be found in NPTL 1.
PTL 1 Japanese Patent Unexamined Publication No. 2008-181564
PTL 2 Japanese Patent Unexamined Publication No. 2007-306258
PTL 3 EP 2 028 858
PTL 4 EP 1 408 686

NPTL 1 Anonymous: "Canon HG10 AVCHD Camcorder: Video Transfers", 20 January 2008 (2008-01-20)

In view of these problems, the present invention provides content uploading system and method, a content receiving device and a content transmitting device as defined in the claims.

With this configuration, the content uploading system allows uploading of intended content configured with one or more pieces of audiovisual data from the content transmitting device to the content receiving device.
Fig. 1 is a block diagram of an example of a configuration of content uploading system in accordance with a first exemplary embodiment of the present invention.
Fig. 2 is a conceptual diagram illustrating a data file management structure of the content uploading system in accordance with the first exemplary embodiment of the present invention.
Fig. 3 is a conceptual diagram illustrating an example of play list, clip number, clip information, and audiovisual data used in the content uploading system in accordance with the first exemplary embodiment of the present invention.
Fig. 4 is a conceptual diagram of an example of clip information in accordance with the first exemplary embodiment of the present invention.
Fig. 5 is a conceptual diagram illustrating procedures for transmitting and receiving a communication telegram of the content uploading system in accordance with the first exemplary embodiment of the present invention.
Fig. 6 illustrates configuration of URI (Uniformed Resource Indicator) and generating rules for destination URI in the content uploading system in accordance with the first exemplary embodiment of the present invention.
Fig. 7 is an example of telegram of the content uploading system in accordance with the first exemplary embodiment of the present invention.
Fig. 8 is an example of telegram.
Fig. 9A is an example of telegram.
Fig. 9B is an example of telegram.
Fig. 9C is an example of telegram.
Fig. 10A illustrates an example of displaying a list of uploaded contents in a content uploading system in accordance with the second exemplary embodiment of the present invention.
Fig. 10B illustrates an example of displaying a list of uploaded contents in the content uploading system in accordance with the second exemplary embodiment of the present invention.
Fig. 11 is an example of telegram in the content uploading system in accordance with the second exemplary embodiment of the present invention.

### (FIRST EXEMPLARY EMBODIMENT)

An exemplary embodiment of a content uploading system and a content playback method of the present invention is described below with reference to drawings. Components with the same operation may be given same reference marks in the exemplary embodiment to omit duplicate description.

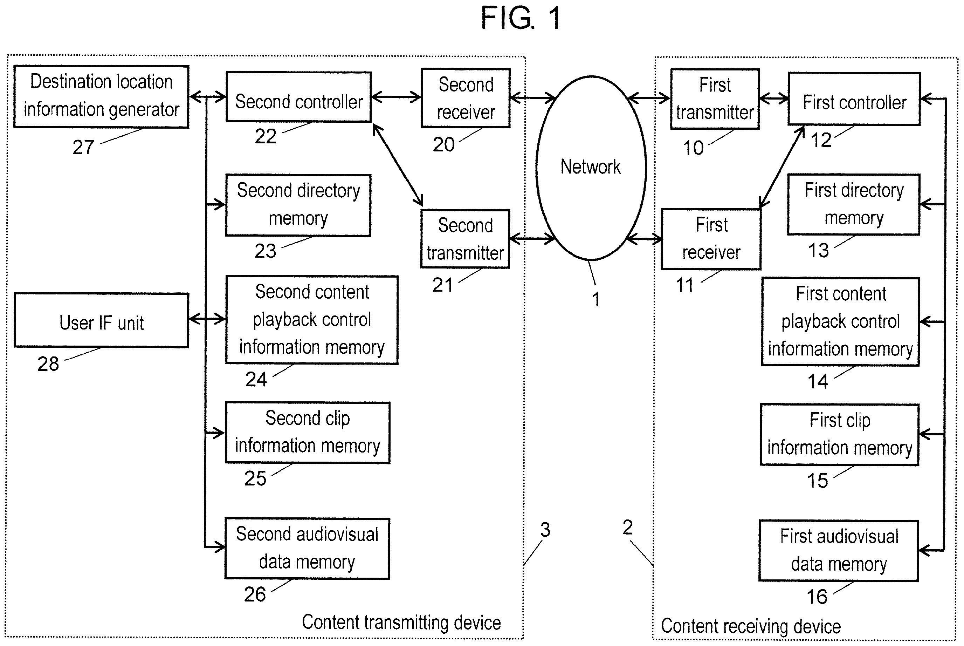

Fig. 1 is a block diagram of an example of a configuration of the content uploading system in the first exemplary embodiment of the present invention. As shown in Fig. 1, the content uploading system in this exemplary embodiment includes content receiving device 2 and content transmitting device 3 connected via network 1.

Content receiving device 2 is a digital media server, and includes first transmitter 10, first receiver 11, first controller 12, first directory memory 13, first content playback control information memory 14, first clip information memory 1, and first audiovisual data memory 16. Fig. 1 shows connecting relationship of these components. Relationship of these components is described later in the description of the operation of each component.

Content transmitting device 3 includes second receiver 20, second transmitter 21, second controller 22, second directory memory 23, second content playback control information memory 24, second clip information memory 25, second audiovisual data memory 26, destination location information generator 27, and user interface (hereafter abbreviated as user IF) unit 28. Connecting relationship of these components is shown in Fig. 1. Relationship of these components is described in the description of the operation of each component.

Content transmitting device 3 in the content uploading system has an uploader function that uploads content configured with multiple pieces of audiovisual data to content receiving device 2, via a network, together with clip information that is management information on multiple pieces of audiovisual data and content playback control information for specifying a playback sequence of multiple pieces of audiovisual data.

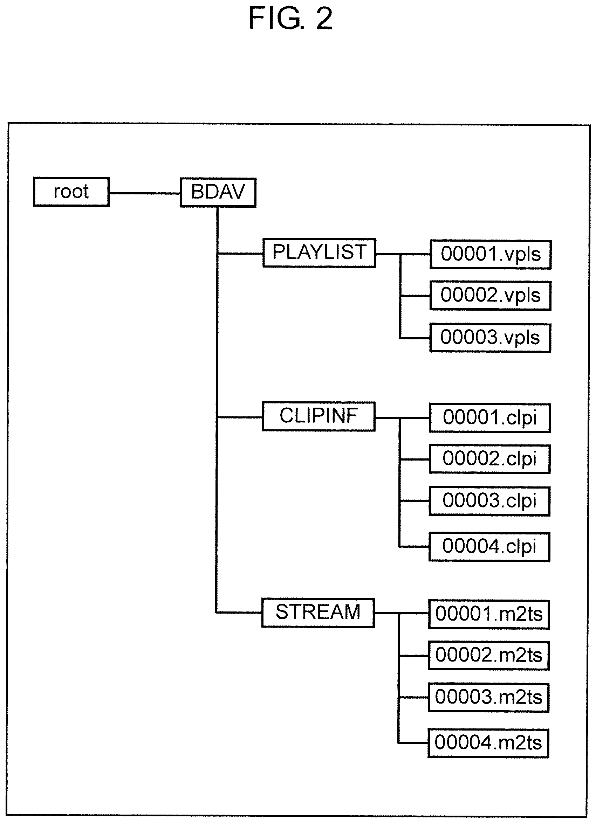

Next, content receiving device 2, and audiovisual data, clip information, and content playback control information stored in content transmitting device 3 are detailed. Fig. 2 is a conceptual diagram of a data file management structure of the content uploading system in the first exemplary embodiment of the present invention. Fig. 2 shows the management structure of each data file of audiovisual data, clip information, and content playback control information. Each data file is hierarchically managed by a directory structure on a recording medium. On the recording medium, one directory (a root directory in an example in Fig. 2) is generated. A range under this directory is managed by a single recording and playback system.

A directory [BDAV] is set under the root directory. A playlist directory [PLAYLIST], a clip information directory [CLIPINF], and a stream directory [STREAM] of audiovisual data are placed under the directory [BDAV].

Playlist directory [PLAYLIST] is a directory for the content playback control information, i.e., database of playlist. In other words, the playlist directory [PLAYLIST] stores a playlist file [xxxxx.vpls] that is a file of playlist on management information for controlling a content playback style. The playlist file [xxxxx.vpls] is a file created for each content, and is edited by the user. As the case may be, this file can refer to multiple pieces of audiovisual data. In a file name, [xxxxx] before [.] (period) is a five-digit number, and [vpls] after the period is a fixed extension for this type file.

Clip information directory [CLIPINF] is a directory for clip information database. In other words, clip information directory [CLIPINF] stores a clip information file [zzzzz.clpi] that stores attribute information of each audiovisual data file. In a file name, [zzzzz] before [.] (period) is a five-digit number, and [clip] after the period is a fixed extension for this type of file.

Stream directory [STREAM] is a directory for real audiovisual data file. In other words, stream directory [STREAM] stores an audiovisual data file that is audiovisual data corresponding to each clip information file. The audiovisual data file has the MPEG2-TS format, and its file name is [zzzzz.m2ts]. In the file name, [zzzzz] before the period is the same as a corresponding clip information file so that the correspondence relationship of the clip information file and this audiovisual data file can be easily figured out.

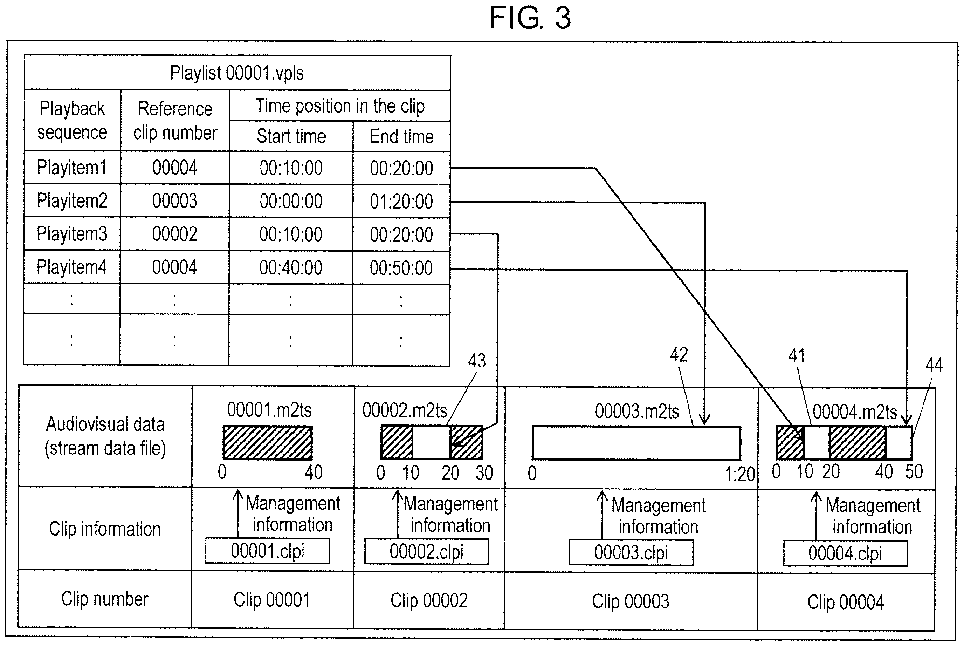

Fig. 3 is a conceptual diagram for illustrating an example of the playlist, clip numbers, clip information, and audiovisual data used in the content uploading system in the first exemplary embodiment of the present invention. Second audiovisual data memory 26 stores four pieces of audiovisual data [00001.m2ts], [00002.m2ts], [00003.m2ts], and [00004.m2ts] in a stream file format. Each of audiovisual data [00001.m2ts], [00002.m2ts], [00003.m2ts], and [00004.m2ts] includes the clip information [00001.clpi], [00002.clpi], [00003.clpi], and [00004.clpi] as management information. Second clip information memory 25 stores the clip information.

Each pair of audiovisual data and clip information configures [Clip00001], [Clip00002], [Clip00003], and [Clip00004], respectively, and is identified by the clip number. Accordingly, the clip number is information indicating location of clip information and also information indicating location of audiovisual data. This is because an address, corresponding to the clip number, where the clip information and audiovisual data are stored can be obtained by referring to database using directories of [CLIPINF] and [STREAM] based on the clip number.

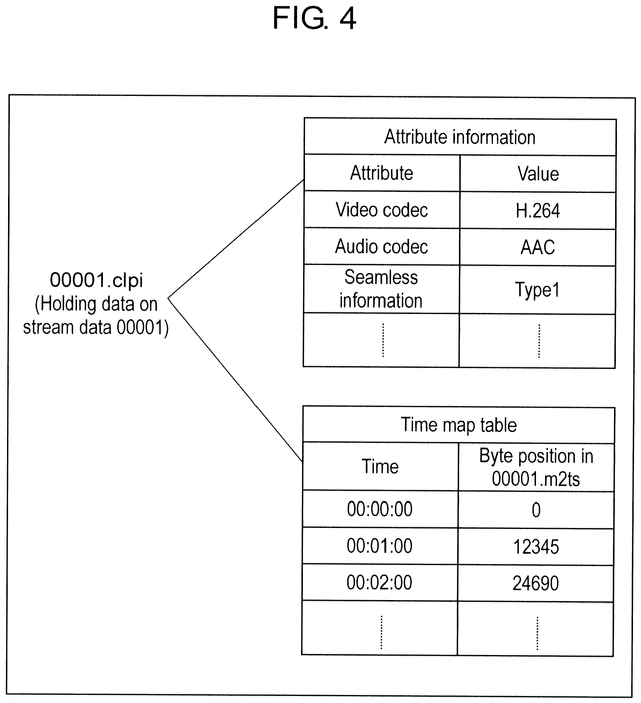

In other words, second audiovisual data memory 26 stores multiple pieces of audiovisual data. Second clip information memory 25 stores the clip information, which is management information for audiovisual data. The clip information is, as shown in Fig. 4, configured with management information on corresponding audiovisual data. More specifically, the clip information includes information indicating methods of image codec and sound codec, attribute information including information on seamless type, and time map table indicating relationship of a time stamp value such as playback time and a byte position of audiovisual data.

Playlist [00001.vpls] in Fig. 3 is an example of content playback control information. Playlist [00001.vpls] specifies the order that content stored in content transmitting device 3 should be played back. In other words, the order of playback is specified by the order of rows of playback sequence. From [Play item 1 (playitem1)] to [Play item 4 (playitem4)] are indicated in sequence in the rows of the playback sequence. First, in [playitem1], a portion from time position [00:10:00] to [00:20:00] of [Clip00004], i.e., a 10-minute portion of audiovisual data 41, is played back. Next, in [playitem2], a portion from time position [00:00:00] to [01:20:00] of [Clip00003], i.e., a portion of audiovisual data 42 is played back. Then, in [playitem3], a portion from time position [00:10:00] to [00:20:00] of [Clip00002], i.e., a portion of audiovisual data 43, is played back. Then, in [playitem4], a portion from time position [00:40:00] to [00:50:00] of [Clip00004], i.e., a portion of audiovisual data 44, is played back.

As described above, the playlist can designate the playback sequence of one or multiple pieces of audiovisual data by [reference clip number]. In addition, any portion to be played back can be selected by designating the playback start time and playback end time of each piece of audiovisual data. In other words, information on [Time position in clip] is information for designating a playback permitted range so as to enable playback of only a portion that the user does want to show, while hiding a portion that the user does not want to show. The playlist designates the playback permitted range designation information based on time. In practical playback of audiovisual data, audiovisual data from the playback start byte position to playback end byte position is played back and controlled by referring to the time map table in the clip information and converting time designation to byte designation.

The directory described using Fig. 2 is stored in second directory memory 23. Content of playlist is stored in second content playback control information memory 24. The playlist is used synonymously with the content playback control information. In other words, second content playback control information memory 24 stores the content playback control information that specifies the playback sequence of audiovisual data in the content configured with multiple pieces of audiovisual data. The content playback control information, as described above, is information for identifying the clip information, and includes information indicating a playback range of audiovisual data. The clip information of each clip is stored in second clip information memory 25. Audiovisual data in each clip is stored in second audiovisual data memory 26.

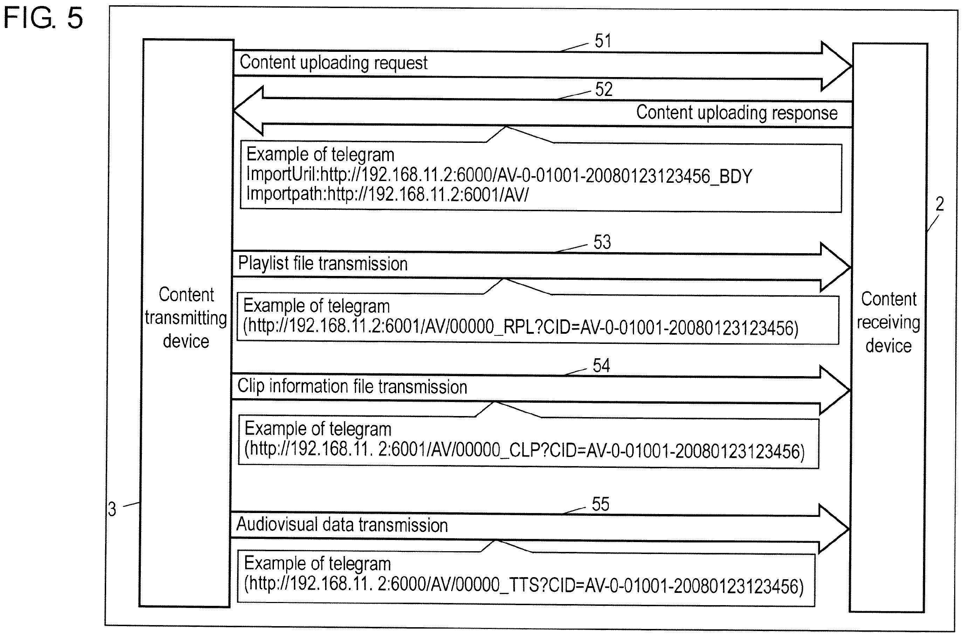

Next, the operation of the content uploading system of the present invention is described with reference to Figs. 1 and 5. Fig. 5 is a conceptual diagram illustrating procedures for transmitting and receiving communication telegram in the content uploading system in the first exemplary embodiment of the present invention. Fig. 5 illustrates procedures for transmitting and receiving communication telegram between content transmitting device 3 and content receiving device 2. Arrow 51 is a content uploading request, arrow 52 is a content uploading response, arrow 53 is playlist file transmission, arrow 54 is clip information file transmission, and arrow 55 is audiovisual data transmission. Details of these telegrams are described later using examples.

In Fig. 1, although not illustrated, user IF unit 28 includes a button for displaying a list of stored contents, a display for displaying information on contents list, and a content selection button for selecting desired content to be uploaded from the contents list based on the contents list information.

The user first operates a button for displaying a list of stored contents. Here, contents list information is read out from second content playback control information memory 24, and this is displayed on a display for indicating the contents list information of user IF unit 28. Next, the user selects from the contents list a content desired to be uploaded. User IF unit 28 then sends identifier information on selected content to second controller 22. Second controller 22 generates a content uploading request indicated by arrow 51, and sends it to network 1 from second transmitter 21. In other words, second transmitter 21 transmits the content uploading request.

First receiver 11 of content receiving device 2 receives a telegram of content uploading request indicated by arrow 51. Then, first receiver 11 sends this telegram of content uploading request to first controller 12. When first controller 12 analyzes and recognizes the telegram as the content uploading request, first controller 12 assigns a unique content ID within content receiving device 2 to a content to be uploaded. ImportUri is generated based on this content ID, and destination IP address and port number for audiovisual data. This importUri indicates destination URI in a content uploading function conforming to DLNA when content transmitting device 3 uploads audiovisual data. Here, however, this importUri is used for the purpose of notifying content ID, and IP address and port number for transferring audiovisual data to content transmitting device 3.

First controller 12 generates importPath for notifying content transmitting device 3 of an IP address for management file, port number information, and transfer path information, so as to transfer the playlist file, clip information file, and so on. Both IP address for audiovisual data and IP address for management file become IP addresses of content receiving device 2. First controller 12 generates a content uploading response including generated importUri and importPath. Then, first transmitter 10 transmits this telegram to network 1 (arrow 52). In other words, first controller 12 generates content identifier information and content destination information in response to the received content uploading request. First transmitter 10 then transmits the generated content identifier information and content destination information.

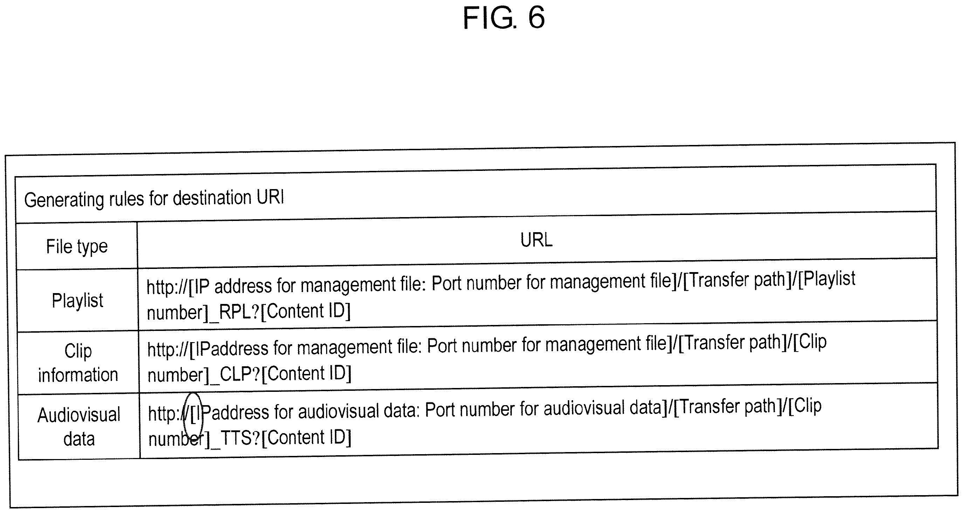

Second receiver 20 of content transmitting device 3 receives a telegram of content uploading response indicated by arrow 52 from network 1. In other words, second receiver 20 receives the content identifier information and content destination information. Second receiver 20 then passes the received telegram of content uploading response to second controller 22. Second controller 22 analyzes importUri included in the telegram of content uploading response, and extracts content ID, and IP address and port number for audiovisual data. In the same way, second controller 22 analyzes importPath, and extracts IP address and port number for management file, and transfer path information. Second controller 22 passes these pieces of information to destination location information generator 27. Destination location information generator 27 generates URI to be specified on uploading the playlist, clip information, and audiovisual data, based on these pieces of information received from second controller 22, and the playlist number and clip number corresponding to the content to be uploaded that are obtained from second directory memory 23, in accordance with generating rules for destination URI in Fig. 6. This URI is notified to second controller 22. In other words, destination location information generator 27 generates content playback control information, clip information, and destination location information of audiovisual data based on the predetermined generating rules and the received content identifier information and content destination information.

Next, second controller 22 reads out the playlist file corresponding to the content to be uploaded from second content control information memory 24, and uses second transmitter 21 to transmit it to network 1, together with a telegram designating destination URI of the playlist (arrow 53 in Fig. 5). Next, second controller 22 reads out a clip information file corresponding to the content to be uploaded from second clip information memory 25, and uses second transmitter 21 to transmit it to network 1, together with a telegram designating destination URI of the clip information (arrow 54 in Fig. 5). Then, second controller 22 reads out an audiovisual data file corresponding to the content to be uploaded from second audiovisual data memory 26, and uses second transmitter 21 to transmit it to network 1, together with a telegram designating destination URI of audiovisual data (arrow 55 in Fig. 5). In other words, second controller 22 makes second transmitter 21 transmit the stored audiovisual data, clip information, and content playback control information to a destination generated in the generated destination location information.

Fig. 5 shows an example of transmitting one piece of clip information and audiovisual data, respectively. If multiple pieces of clip information and audiovisual data corresponding to the content to be uploaded exist, destination URI with different clip number is generated in accordance with the generating rules for destination URI in Fig. 6. Each clip information and audiovisual data is repeatedly transmitted to upload the entire content.

In the description, second controller 22 transfers all pieces of audiovisual data. However, when the second controller 22 makes the second transmitter 21 transmit the audiovisual data stored, only a playback range of audiovisual data designated by the content playback control information is transmitted, without transmitting data out of the playback range. In other words, the content uploading system in this exemplary embodiment transmits only audiovisual data of a portion designated by the content playback control information, in order to reduce the time consumed for uploading the content. However, in this case, byte position information on "time map table indicating the relationship of the time stamp value such as playback time and the byte position of audiovisual data" deviates. Accordingly, it is necessary to appropriately rewrite this byte position information before transferring the clip information file.

As described above, content receiving device 2 receives the telegram of playlist file transmission indicated by arrow 53 from network 1. In the same way, content receiving device 2 receives the telegram of audiovisual data transmission indicated by arrow 55 from network 1. In other words, the content configured with multiple pieces of audiovisual data held in content transmitting device 3 is uploaded to content receiving device 2 in the content uploading system via network 1, together with the clip information that is the audiovisual data management information and the content playback control information for specifying the playback sequence of audiovisual data.

First audiovisual data memory 16 of content receiving device 2 has a function of storing multiple pieces of audiovisual data from the information received in this way. First clip information memory 15 has a function of storing the clip information. First content playback control information memory 14 has a function of storing the content playback control information. First receiver 11 receives multiple pieces of audiovisual data, clip information, and content playback control information. First controller 12 makes first audiovisual data memory 16, first clip information memory 15, and first content playback control information memory 14 respectively store received multiple pieces of audiovisual data, clip information, and content playback control information. Content transmitting device 3 in this exemplary embodiment can generate playlist URI of the content to be uploaded, URI of multiple pieces of clip information, and URI of multiple pieces of audiovisual data by using the content identifier information and content destination information provided from content receiving device 2. Accordingly, content transmitting device 3 can easily upload intended content to content receiving device 2. Content receiving device 2 can store and reproduce these pieces of information.

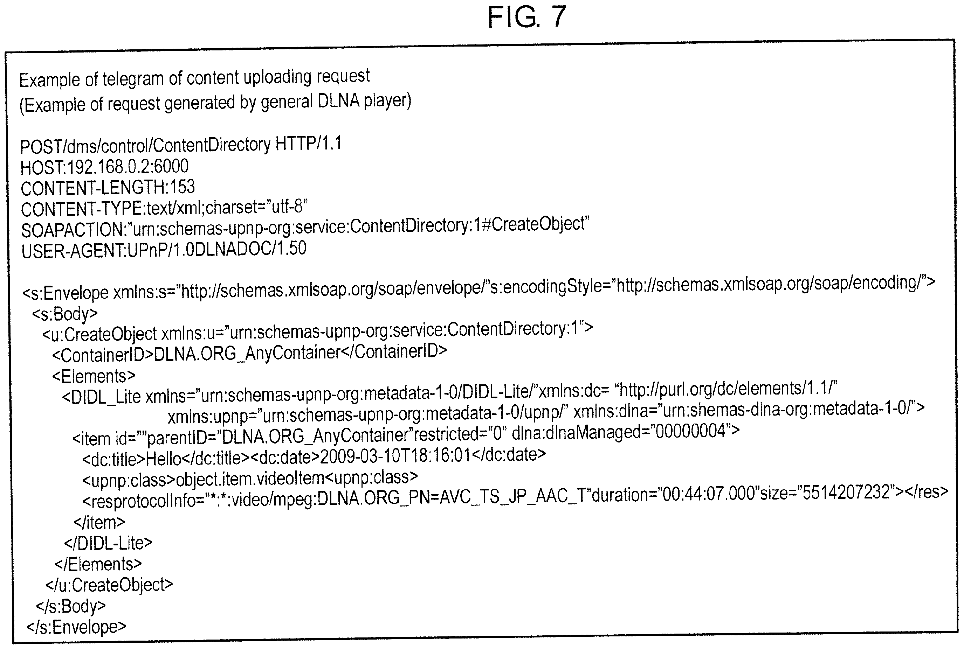

Fig. 7 shows an example of telegram of the content uploading system in the first exemplary embodiment of the present invention. The telegram shown in Fig. 7 conforms to DLNA guidelines. In other words, the content uploading system in this exemplary embodiment enables communications between content transmitting device 3 as a device with uploader function and content receiving device 2 as a digital media server via network 1 using a communication protocol in accordance with the DLNA standard.

The telegram shown in Fig. 7 is an example of the content uploading request indicated by arrow 51 that content transmitting device 3 transmits to content receiving device 2.

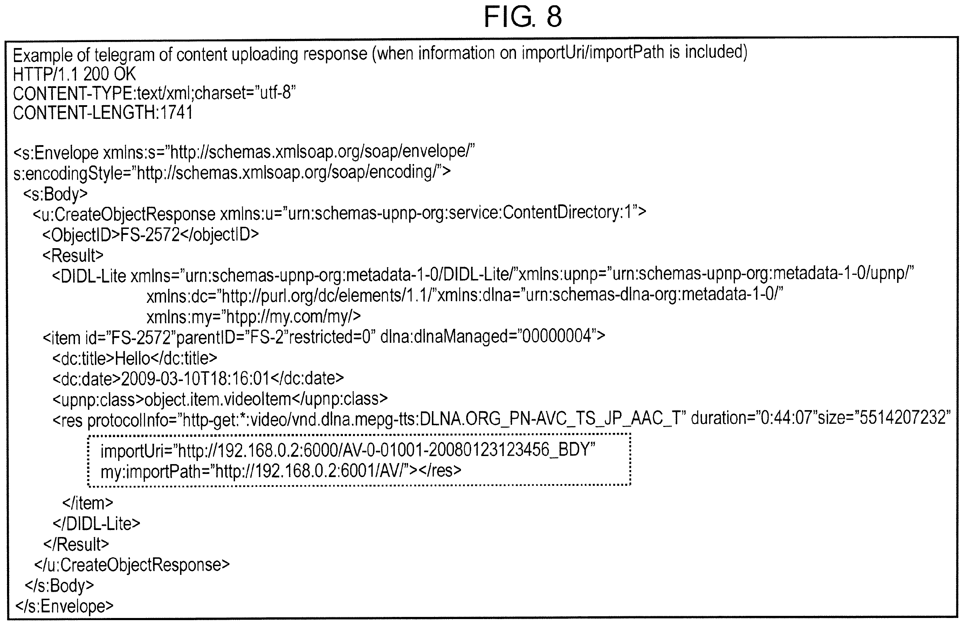

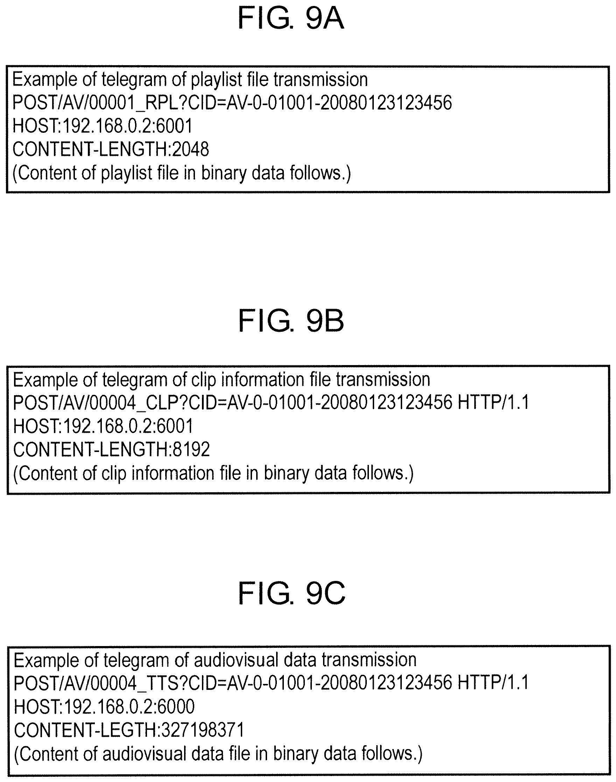

Fig. 8 is an example of details of telegram of content uploading response indicated by arrow 52 in Fig. 5. A portion enclosed by a dotted line is information on importUri and importPath. As an example of importUri, it includes information [http://192.168.0.2:6000/AV-0-01001-20080123123456_BDY]. In this information, [192.168.0.2:6000] means the IP address and port number for audiovisual data in content receiving device 2, and [AV-0-01001-20080123123456] means content ID, which is the playlist identification information.
(50) The playlist identification information is described using a five-digit number, such as [00001.vpls] in Figs. 2 and 3. However, a separate directory for [root], [BDAV], and [PLYALIST] may be provided for each content in first directory memory 13. In this case, the same numerical value may be used in each directory if the playlist identification information is expressed by a five-digit number. Accordingly, information with a format such as [AV-0-01001-20080123123456] is used as an ID for identifying playlist in the entire memory area of first directory memory 13.
(51) An example of importPath includes information such as [http://192.168.0.2:6001/AV/]. In this information, [192.168.0.2:6001] means the IP address for management file and port number of content receiving device 2, and [/AV/] indicates the transfer path information.
(52) The telegram of playlist file transmission indicated by arrow 53 in Fig. 5 follows the form of an example of telegram of playlist file transmission in Fig. 9A. In the telegram, [HOST:192.168.0.2:6001] indicates the IP address and port number for management file. Details of a table of playlist [00001.vpls] shown in Fig. 3 is added in the form of binary data after [CONTENT-LENGTH:2048].
(53) The telegram of clip information transmission indicated by arrow 54 in Fig. 5 follows the form of an example of telegram of clip information transmission in Fig. 9B. In this telegram, [00004_CLP] in [POST/AV/00004_CLP?CID=AV-0-01001-20080123123456HTTP/1.1] indicates the clip information that is a clip number of the first playitem1 in the playlist. Details of a file of [00004.clpi] is added in the form of binary data after [CONTENT-LENGTH:8192].

The telegram of audiovisual data transmission indicated by arrow 55 in Fig. 5 follows the form of an example of telegram of audiovisual data transmission. In this telegram, [00004_TTS] in [POST/AV/00004_TTS?CID=AV-0-01001-20080123123456 HTTP/1.1] indicates audiovisual data of the clip number of the first playitem1 in the playlist. [HOST:192.168.0.2:6000] indicates IP address and port number for audiovisual data. Details of a file of [00004.m2ts] is added in the form of binary data after [CONTENT-LENGTH:327198371].

Fig. 6 illustrates URI configuration and generating rules for destination URI in the content uploading system in the first exemplary embodiment of the present invention. In Fig. 6, on generating telegrams, the generating rules for generating the playlist, clip information, and URI that indicates location of audiovisual data are specified in accordance with a specified format, using the content identifier information and content destination information included in the content uploading response. These generating rules are retained in destination location information generator 27, and are used for generating a telegram of playlist file transmission indicated by arrow 53, a telegram of clip information file transmission indicated by arrow 54, and a telegram of audiovisual data transmission indicated by arrow 55.

Playlist destination URI, [http://[IP address for management file:Port number of management file]/[Transfer path]/[Playlist number]_RPL?[Content ID]] is the destination location information of the content playback control information. In other words, the destination location information of the content playback control information is destination URI of the playlist.

Destination URI of the clip information, [http://[IP address for management file: IP number for management file]/[Transfer path]/[Clip number]_CLIP?[Content ID] is the destination location information of the clip information. In other words, the destination location information of the clip information is destination URI of the clip information.

Destination URI of audiovisual data, [http://[IP address for audiovisual data:Port number for audiovisual data]/[Transfer path]/[Clip number]_TTS?[Content ID]] is the destination location information of audiovisual data. In other words, the destination location information of audiovisual data is destination URI of audiovisual data.

IP address for audiovisual data, port number for audiovisual data, IP address for management file, port number for management file, and transfer path are the content destination information for receiving the content playback control information, clip information, and audiovisual data from network 1. Content ID included in each of the above generations rules is the content identifier information for identifying a group of the content playback control information, clip information, and audiovisual data.

In other words, first transmitter 10 at least transmits the content identifier information for identifying a group of the content playback control information, clip information, and audiovisual data, and the content destination information for receiving the content playback control information, clip information, and audiovisual data. Second receiver 20 at least receives the content identifier information and content destination information from network 1. Destination location information generator 27 generates each of the content playback control information, clip information, and destination location information of audiovisual data from the content identifier information and content destination information. Second transmitter 21at least transmits the content playback control information, clip information, and audiovisual data to network 1, setting the destination location information as a destination. First receiver 11 at least receives the content playback control information, clip information, and audiovisual data.

In the content uploading system in this exemplary embodiment, as described above, content transmitting device 3 can generate playlist URI of content to be uploaded, URI of multiple pieces of clip information, and URI of multiple pieces of audiovisual data, using the content identifier information and content destination information provided from content receiving device 2. A desired content can thus be easily uploaded to content receiving device 2. By uploading the playlist and clip information, in addition to audiovisual data, special playback or writing to BD becomes feasible without generating information equivalent to the playlist and clip information by analyzing audiovisual data in content receiving device 2. Therefore, high-speed uploading becomes feasible without applying processing load to content receiving device 2. In addition, by uploading the playlist and clip information, information for seamless playback or accompanying information such as chapter information will not be missing.

The above description gives an example of generating the destination location information on each of the content playback control information, clip information, and audiovisual data from the content identifier information and content destination information, and transmitting data to each piece of destination location information as a destination separately. Alternatively" single destination location information may be generated from the content identifier and destination information, and each of the content playback control information, clip information, audiovisual data, and data integrating relative location information that indicates storage area of each of the content playback control information, clip information, and audiovisual data may be transferred to this destination location information as a destination.

A content uploading method in this exemplary embodiment, as described above, is a content uploading method in the content uploading system that uploads content configured with multiple pieces of audiovisual data held in content transmitting device 3 to content receiving device 2, via network 1, together with the clip information that is management information on audiovisual data and the content playback control information for specifying a playback sequence of audiovisual data.

In the content receiving device 2, the content uploading method includes the step of receiving the content uploading request, the step of generating the content identifier information and content destination information in response to the received content uploading request, and the step of transmitting the generated content identifier information and content destination information. In the content transmitting device 3, the content uploading method includes the step of transmitting the content uploading request, the step of receiving the content identifier information and content destination information, the step of generating destination location information of the content playback control information, clip information, and audiovisual data based on predetermined generating rules and the received content identifier information and content destination information; and the step of transmitting audiovisual data, clip information, and content playback control information held to the generated destination location information as a destination. Transfer of the playlist file and clip information file in addition to audiovisual stream on uploading in this method enables uploading of the content without missing information that is not detectable just by analyzing audiovisual stream.

### (SECOND EXEMPLARY EMBODIMENT)

The content uploading system in the first exemplary embodiment transfers the playlist file and clip information file in addition to audiovisual stream on uploading, so as to upload content without missing information that is not detectable just by analyzing audiovisual stream. However, information that is not defined in normal playlist file and clip information file may be missing.

In other words, further disadvantage described below can be predicted. Firstly, content type information for distinguishing whether the stream is recorded as AVCHD, broadcast-recording, or downloaded from a service on the Internet is not transferred. Secondly, content generating device identification information for identifying a type of device used for generating the content, and hardware or software version used for recording are not transferred.

To further solve this disadvantage, content transmitting device 3 transfers at least the content type information or the content generating device identification information to content receiving device 2, in addition to normal playlist file and clip information file, in this exemplary embodiment. Next is described an example of control method and effects. As a precondition, the content type information and content generating device identification information are transferred by defining a field for storing the content type information and content generating device identification information in a user-defined area in the playlist file and clip information file, and setting an appropriate value in this area.

First, control in response to received content type information and its effect in the content receiving device 2 is described.

For example, a content type can be indicated to the user in response to the content type information. This may be displayed in any way, including a string of characters, icons, and logos.

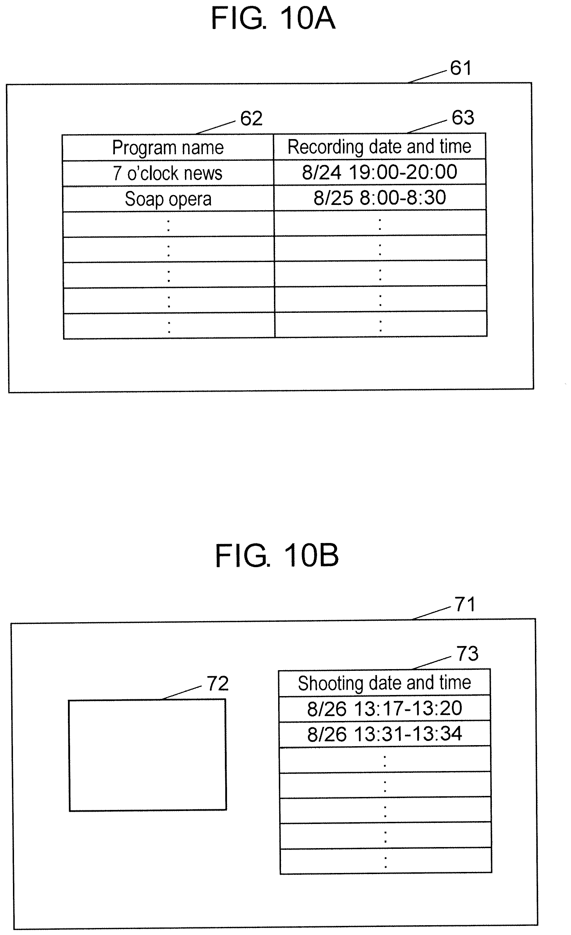

In addition, a display layout corresponding to content type or what kind of attribute information is displayed can be changed. Figs. 10A and 10B give specific examples of a content display screen corresponding to the content type information. Fig. 10A gives an example of layout of recorded contents. In the case of recorded contents, the user often identifies each content by program name information and recording date and time. Therefore, a list of program name information 62 and recording date and time 63 is displayed on display screen 61 for the user to select content. Fig. 10B gives an example of layout of AVCHD contents. Contents that the user has recorded, such as AVCHD, often lack title information. The user often identifies each content based on shooting date and time and actual moving pictures. Therefore, a list of shooting date and time 73 and a still picture or moving picture of selected content in a small sub-screen 72 are displayed on display screen 71 for the user to select content. In the DLNA guidelines, the time information indicated in the dc:date field in the content uploading request is generally used for both recording date and time and shooting date and time. Also based on the content type information, this time information is determined as the recording date and time in the case of recorded contents, and this time information is determined as shooting date and time in the case of AVCHD contents.

In addition to changing the display method of content display screen corresponding to the content type information, a playback control method can also be changed. More specifically, in the case of AVCHD contents, the user often skip some parts to search for the part that the user want to see based on chapter information where shooting switchover is recorded. Therefore, an operation interface for skipping a chapter is provided. In the case of recorded programs, the user often skips commercial films during playback. Therefore, an operation interface for skipping commercial films is provided.

Still more, a range of settings for playing back video images and sound can be appropriately changed corresponding to the content type information. More specifically, in the case of AVCHD, a mode is set for displaying images brighter and reproducing sound clearer because images are shot by the user. In the case of recorded programs, a video and audio mode is set based on attached category information (sports, drama, music programs, etc.). In the case of movie contents downloaded from services on the Internet, a cinema mode is set.

Still more, predetermined control after receiving content can be changed in response to the content type information. For example, in the case of contents downloaded from services on the Internet, a system can be built for directly obtaining meta-data and related information on the content from that service on the Internet by further transferring ID of downloaded content. Also in the case of photo contents typically of AVCHD and JPEG (Joint Photographic Experts Group), a process may be executed to obtain additional information including user shooting place information, type of lens used for shooting, and shooting parameters such as F number by analyzing audiovisual stream, playlist file, clip information file, still picture file, and so on. These pieces of information may also be displayed or used for other control.

Since content transmitting device 3 generates audiovisual stream, playlist file, and clip information file in different ways depending on content type, it may be better to apply different control to different content type. For example, if a certain content type may cause a problem when played back by other device, whether or not to disclose contents to other devices typically conforming to DLNA guidelines can be controlled, depending on content types.

If content copied as it is to recording medium, such as DVD (Digital Versatile Disc) or BD may not be properly played back in other playback device due to the possibility of high bit rate of a certain type of content, whether or not to convert bit rate on recording to DVD can be controlled, depending on content types. In addition, in some cases, it may be better to obtain information first by analyzing audiovisual stream without receiving the playlist information or clip information. Accordingly, transfer of the playlist file and clip information file described in the first exemplary embodiment of the present invention may not be executed or a portion of information may be obtained by analyzing audiovisual stream even if the playlist file and clip information file are transferred, depending on the content generating device identification information. This kind of control may be provided.

Next is described control and effect based on received content generating device identification information in content receiving device 2.

For example, the content generating device identification information enables display of which device is used for generating content to the user. This may be displayed in any form, including a string of characters, icons, and logos. By further relating this information to information on a person possessing each shooting device, who has recorded the content can be identified and also displayed.

Still more, a range of setting on playing back images and sound can be appropriately changed in response to the content generating device identification information. More specifically, an image captured by a certain device is played back brighter, or an image captured by a certain device is played back darker. Compensation in response to characteristic of each device becomes feasible.

Still more, since content transmitting device 3 generates audiovisual stream, playlist file, and clip information file in different ways depending on the content generating device identification information, it may be better to apply different control in response to the content generating device identification information. For example, if content generated by a certain device may cause problem when it is played back using other device, whether or not to disclose contents to other devices typically conforming to DLNA guidelines can be controlled, depending on the content generating equipment identification information.

Still more, if content generated by a certain device cannot be properly played back by other playback device if the content is copied to a recording medium, such as DVD and BD, as it is, due to the possibility of high bit rate of content generated by a certain device, whether or not to convert a bit rate on recording to DVD can be controlled, depending on the content generating device identification information. In some cases, it may be better to obtain information first by analyzing audiovisual stream without receiving the playlist information or clip information. Accordingly, transfer of the playlist file and clip information file described in the first exemplary embodiment of the present invention may not be executed or a portion of information may be obtained by analyzing audiovisual stream, even if the playlist file and clip information file are transferred, depending on the content generating device identification information. This kind of control may be provided.

In the content uploading system in this exemplary embodiment as described above, at least clip information or content playback control information includes at least content type information or content generating device identification information. First controller 12 may change the content display style or content playback style in response to at least received content type information or content generating device identification information. This enables display of the content type to the user, in response to the content type information. In addition, a display layout or which attribute information to display can be changed in response to the content type.

In the content uploading system in this exemplary embodiment, second transmitter 21 transmits at least content type information or content generating device identification information as a content uploading request, and first controller 12 may change the content display style or content playback style in response to at least received content type information or content generating device identification information. This realizes more appropriate content playback style by applying different control depending on the content generating device identification information.

The above description refers to the method of transferring from content transmitting device 3 to content receiving device 2 the content type information and content generating device identification information by including these pieces of information in the playlist file and clip information file. Alternatively" it is apparent that other transfer methods are also applicable.

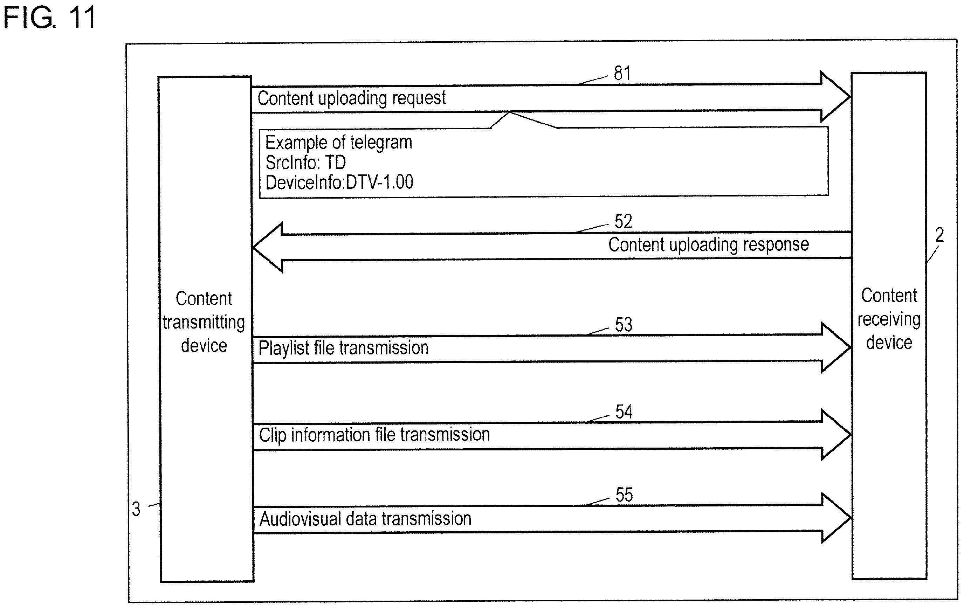

Fig. 11 is an example of a telegram in the content uploading system in the second exemplary embodiment of the present invention. Fig. 11 is an example of uploading content using a sequence same as that in Fig. 5. However, in Fig. 11, the content type information and content generating device identification information are transferred by including them in the content uploading request indicated by arrow 81, without including them in the playlist file and clip information file. In other words, the content type information is indicated in srcInfo field and the content generating device identification information is indicated in a deviceInfo field as attributes of content in the telegram of content uploading request indicated by arrow 81. TD indicated for srcInfo in Fig. 11 intends to mean that the content is recording of digital terrestrial broadcasting. DTV-1.00 indicated for deviceInfo intends to mean that the content is generated and transferred using the initial version of hardware and software for a certain type of digital television. However, they are just examples, and thus the present invention is not limited to these examples.

The above description refers to the case of transferring the content type information or content generating device identification information as additional information to be transferred from content transmitting device 3 to content receiving device 2. Alternatively, other valuable information can also be transferred by including it in the playlist file, clip information file, or content uploading request indicated by arrow 81.

For example, the digital terrestrial broadcasting standard (ARIB TR-B14), which is the digital broadcasting standard in Japan, and BS (Broadcasting Satellites) digital broadcasting and broad-band CS (Communications Satellites) digital broadcasting standard (ARIB TR-B15) specify transfer of category information such as drama and sports at transferring accumulated broadcast contents to other device in accordance with the DLNA guidelines. In addition, further detailed category information contained in broadcast waves may be transferred. This allows content receiving device 2 to control search and display based on further detailed categories.

First transmitter 10 and first receiver 11 configuring content receiving device 2 and second receiver 20 and second transmitter 21 configuring content transmitting device 3 in Fig. 1 can be realized by dedicated hardware (dedicated circuit) for processing a range of telegrams and information described above. Another way of realizing these devices is normally the use of software for processing telegrams and information in the operations of each component configuring content receiving device 2 and content transmitting device 3. In other words, the above operation details are described in software and recorded in ROM, and applicable software is executed on common MPU (Micro Processor Unit) or memory. A nonvolatile recording medium, such as rewritable ROM, is preferable, but a volatile recording medium is also acceptable.

A nonvolatile large-capacity recording medium, such as hard disk drive and BD disc, is preferable for first directory memory 13, first content playback control information memory 14, first clip information memory 15, and first audiovisual data memory 16 in content receiving device 2; and second directory memory 23, second content playback control information memory 24, second clip information memory 25, and second audiovisual data memory 26 in content transmitting device 3 in Fig. 1. Alternatively, a volatile recording medium is also acceptable.

The content uploading system and content playback method of the present invention aims to further improve content playback systems conforming to DLNA. Accordingly, the server and content playback device have the communication step in communication protocol conforming to the DLNA standard. Therefore examples conforming to DLNA are used in the description of information and telegram.

Alternatively, the content uploading system and content uploading method of the present invention are also applicable to content transmitting devices and content receiving devices not conforming to DLNA.

Furthermore, the present invention is not limited to the above exemplary embodiments. It is apparent that structures, contents and expression style of telegrams, and flow chart procedures in the exemplary embodiments can be modified, and all modifications fall within the scope of the present invention.

### INDUSTRIAL APPLICABILITY

The content uploading system, content uploading method, and content transmitting/receiving device of the present invention are effectively applicable to systems and methods for uploading contents from a content receiving transmitting device to a content receiving device.

### REFERENCE MARKS IN THE DRAWINGS

- 1: Network
- 2: Content receiving device
- 3: Content transmitting device
- 10: First transmitter
- 11: First receiver
- 12: First controller
- 13: First directory memory
- 14: First content playback control information memory
- 15: First clip information memory
- 16: First audiovisual data memory
- 20: Second receiver
- 21: Second transmitter
- 22: Second controller
- 23: Second directory memory
- 24: Second content playback control information memory
- 25: Second clip information memory
- 26: Second audiovisual data memory
- 27: Destination location information generator
- 28: User IF unit

## Claims

1. A content uploading system for uploading content configured with a plurality of pieces of audiovisual data held in a content transmitting device (3) to a content receiving device (2) via a network, wherein the content is transmitted together with clip information that is management information on the audiovisual data and content playback control information for specifying a playback sequence of the audiovisual data, the content uploading system comprising:
the content receiving device (2) including:
a first receiver (11) for receiving a content uploading request;
a first controller (12) for generating content identifier information and content destination information in response to the content uploading request received; and
a first transmitter (10) for transmitting the content identifier information generated and the content destination information generated; and
the content transmitting device (3) including:
a second transmitter (21) for transmitting the content uploading request;
a second receiver (20) for receiving the content identifier information and the content destination information;
a second audiovisual data memory (26) for storing the plurality of pieces of audiovisual data;
a second clip information memory (25) for storing the clip information;
a second content playback control information memory (24) for storing the content playback control information;
a destination location information generator (27) for generating a destination URI of the content playback control information, a destination URI of the clip information, and a destination URI of the audiovisual data in a specified format, respectively, by combining the content identifier information received and the content destination information received in accordance with a predetermined generating rule; and
a second controller (22) for making the second transmitter (21) transmit the stored audiovisual data, the clip information, and the content playback control information to the destination indicated by the respective destination URI.

2. The content uploading system according to claim 1, wherein,
when the second controller (22) makes the second transmitter (21) transmit the audiovisual data stored, only a portion of audiovisual data designated by the content playback control information is transmitted.

3. The content uploading system according to claim 1, wherein
at least one of the clip information and the content playback control information includes at least one of content type information and content generating device identification information; and
the first controller (12) changes one of a display style of the content and a playback style of the content in response to at least one of the content type information received and the content generating device identification information received.

4. The content uploading system according to claim 1, wherein
the second transmitter (21) transmits at least one of content type information and content generating device identification information as the content uploading request; and
the first controller (12) changes one of a display style of the content and a playback style of the content in response to at least one of the content type information received and the content generating device identification information received.

5. The content uploading system according to claim 1, wherein
a communication protocol of the network conforms to DLNA (Digital living Network Alliance) standard.

6. A content transmitting device in a content uploading system that uploads content configured with a plurality of pieces of audiovisual data held in the content transmitting device to a content receiving device (2) via a network, wherein the content is transmitted together with clip information that is management information on the audiovisual data and content playback control information for specifying a playback sequence of the audiovisual data, the content transmitting device comprising:
a second transmitter (21) for transmitting a content uploading request;
a second receiver (20) for receiving content identifier information and content destination information;
a second audiovisual data memory (26) for storing the plurality of pieces of the audiovisual data;
a second clip information memory (25) for storing the clip information;
a second content playback control information memory (24) for storing the content playback control information;
a destination location information generator (27) for generating a destination URI of the content playback control information, a destination URI of the clip information, and a destination URI of the audiovisual data in a specified format, respectively, by combining the content identifier information received and the content destination information received in accordance with a predetermined generating rule; and
a second controller (22) for making the second transmitter (21) transmit the stored audiovisual data, the clip information, and the content playback control information to the destination indicated by the respective destination URI.

7. The content transmitting device according to claim 6, wherein,
when the second controller (22) makes the second transmitter (21) transmit the audiovisual data stored, only a portion of audiovisual data designated by the content playback control information is transmitted.

8. The content transmitting device according to claim 6, wherein
at least one of the clip information and the content playback control information includes at least one of content type information and content generating device identification information.

9. The content transmitting device according to claim 6, wherein
the second transmitter (21) transmits at least one of content type information and content generating device identification information as the content uploading request.

10. A content uploading method used in a content uploading system for uploading content configured with a plurality of pieces of audiovisual data held in a content transmitting device (3) to a content receiving device (2) via a network, wherein the content is transmitted together with clip information that is management information on the audiovisual data and content playback control information for specifying a playback sequence of the audiovisual data,
the content uploading method in the content receiving device (2) comprising:
receiving a content uploading request;
generating content identifier information and content destination information in response to the content uploading request received; and
transmitting the content identifier information generated and the content destination information generated; and
the content uploading method in the content receiving device (2) comprising:
transmitting the content uploading request;
receiving the content identifier information and the content destination information;
generating a destination URI of the content playback control information, a destination URI of the clip information, and a destination URI of the audiovisual data in a specified format, respectively, by combining the content identifier information received and the content destination information received in accordance with a predetermined generating rule; and
transmitting the stored audiovisual data, the clip information, and the content playback control information to the destination indicated by the respective destination URI.

## Patentansprüche

1. Inhaltshochladesystem zum Hochladen von Inhalt, der mit einer Vielzahl von Stücken audiovisueller Daten konfiguriert ist, die in einer Inhaltssendevorrichtung (3) gehalten werden, an eine Inhaltsempfangsvorrichtung (2) über ein Netzwerk, wobei der Inhalt zusammen mit Clip-Informationen, die Verwaltungsinformationen über die audiovisuellen Daten sind, und Inhaltswiedergabe-Steuerinformationen zum Spezifizieren einer Wiedergabesequenz der audiovisuellen Daten gesendet wird, wobei das Inhaltshochladesystem umfasst:
die Inhaltsempfangsvorrichtung (2), die umfasst:
einen ersten Empfänger (11) zum Empfangen einer Inhaltshochladeanfrage;
eine erste Steuereinheit (12) zum Erzeugen von Inhaltskennungsinformationen und Inhaltszielortinformationen als Reaktion auf die empfangene Inhaltshochladeanforderung; und
einen ersten Sender (10) zum Senden der erzeugten Inhaltskennungsinformationen und der erzeugten Inhaltszielortinformationen; und
die Inhaltssendevorrichtung (3), die umfasst:
einen zweiten Sender (21) zum Senden der Inhaltshochladeanfrage;
einen zweiten Empfänger (20) zum Empfangen der Inhaltskennungsinformationen und der Inhaltszielortinformationen;
einen zweiten audiovisuellen Datenspeicher (26) zum Speichern der Vielzahl von Stücken audiovisueller Daten;
einen zweiten Clip-Informationsspeicher (25) zum Speichern der Clip-Informationen;
einen zweiten Inhaltswiedergabe-Steuerinformationsspeicher (24) zum Speichern der Inhaltswiedergabe-Steuerinformationen;
einen Zielort-Informationsgenerator (27) zum Erzeugen jeweils eines Zielort-URI der Inhaltswiedergabe-Steuerinformationen, eines Zielort-URI der Clip-Informationen und eines Zielort-URI der audiovisuellen Daten in einem spezifizierten Format durch Kombinieren der empfangenen Inhaltskennungsinformationen und der Inhaltszielortinformationen, die gemäß einer vorbestimmten Erzeugungsregel empfangen werden; und
eine zweite Steuereinheit (22), um den zweiten Sender (21) zu veranlassen, die gespeicherten audiovisuellen Daten, die Clip-Information und die Inhaltswiedergabe-Steuerinformationen zu dem durch den jeweiligen Zielort-URI angezeigten Zielort zu senden.

2. Inhaltshochladesystem nach Anspruch 1, bei dem,
wenn die zweite Steuereinheit (22) den zweiten Sender (21) veranlasst, die gespeicherten audiovisuellen Daten zu senden, nur ein Teil der audiovisuellen Daten, die durch die Inhaltswiedergabe-Steuerinformationen bestimmt sind, gesendet wird.

3. Inhaltshochladesystem nach Anspruch 1, bei dem
die Clip-Informationen und/oder die Inhaltswiedergabe-Steuerinformationen Inhaltstypinformationen und/oder Inhaltserzeugungsvorrichtungs-Kennungsinformationen umfassen; und
die erste Steuereinheit (12) einen Anzeigestil des Inhalts oder einen Wiedergabestil des Inhalts als Reaktion auf die empfangenen Inhaltstypinformationen und/oder die empfangenen Inhaltserzeugungsvorrichtungs-Kennungsinformationen ändert.

4. Inhaltshochladesystem nach Anspruch 1, bei dem
der zweite Sender (21) Informationen des Inhaltstyps und/oder Inhaltserzeugungsvorrichtungs-Kennungsinformationen als die Inhaltshochladeanforderung sendet; und
die erste Steuereinheit (12) einen Anzeigestil des Inhalts und/oder einen Wiedergabestil des Inhalts als Reaktion auf die empfangenen Inhaltstypinformationen und/oder die empfangenen Inhaltserzeugungsvorrichtungs-Kennungsinformationen ändert.

5. Inhaltshochladesystem nach Anspruch 1, bei dem
ein Kommunikationsprotokoll des Netzwerks dem DLNA-Standard (Digital Living Network Alliance) entspricht.

6. Inhaltssendevorrichtung in einem Inhaltshochladesystem, das Inhalt, der mit einer Vielzahl von Stücken audiovisueller Daten konfiguriert ist, die in der Inhaltssendevorrichtung gehalten werden, über ein Netzwerk zu einer Inhaltsempfangsvorrichtung (2) hochlädt, wobei der Inhalt zusammen mit Clip-Informationen, die Verwaltungsinformationen über die audiovisuellen Daten sind, und Inhaltswiedergabe-Steuerinformationen zum Spezifizieren einer Wiedergabesequenz der audiovisuellen Daten gesendet wird, wobei die Inhaltssendevorrichtung umfasst:
einen zweiten Sender (21) zum Senden einer Inhaltshochladeanfrage;
einen zweiten Empfänger (20) zum Empfangen von Inhaltskennungsinformationen und Inhaltszielortinformationen;
einen zweiten audiovisuellen Datenspeicher (26) zum Speichern der Mehrzahl von Teilen der audiovisuellen Daten;
einen zweiten Clip-Informationsspeicher (25) zum Speichern der Clip-Informationen;
einen zweiten Inhaltswiedergabe-Steuerinformationsspeicher (24) zum Speichern der Inhaltswiedergabe-Steuerinformationen;
einen Zielort-Informationsgenerator (27) zum Erzeugen jeweils eines Zielort-URI der Inhaltswiedergabe-Steuerinformationen, eines Zielort-URI der Clip-Informationen und eines Zielort-URI der audiovisuellen Daten in einem spezifizierten Format durch Kombinieren der empfangenen Inhaltsidentifikationsinformationen und der empfangenen Inhaltszielortinformationen gemäß einer vorbestimmten Erzeugungsregel; und
eine zweite Steuereinheit (22), um den zweiten Sender (21) zu veranlassen, die gespeicherten audiovisuellen Daten, die Clip-Information und die Inhaltswiedergabe-Steuerinformationen zu dem durch den jeweiligen Zielort-URI angezeigten Zielort zu senden.

7. Inhaltssendevorrichtung nach Anspruch 6, bei der,
wenn die zweite Steuereinheit (22) den zweiten Sender (21) veranlasst, die gespeicherten audiovisuellen Daten zu senden, nur ein Teil der audiovisuellen Daten, die durch die Inhaltswiedergabe-Steuerinformationen bestimmt sind, gesendet wird.

8. Inhaltssendevorrichtung nach Anspruch 6, bei der
die Clip-Informationen und/oder die Inhaltswiedergabe-Steuerinformationen Inhaltstypinformationen und/oder Inhaltserzeugungsvorrichtungs-Kennungsinformationen umfassen.

9. Inhaltssendevorrichtung nach Anspruch 6, bei der
der zweite Sender (21) Informationen des Inhaltstyps und/oder Inhaltserzeugungsvorrichtungs-Kennungsinformationen als Inhaltshochladeanforderung sendet.

10. Inhaltshochladeverfahren, das in einem Inhaltshochladesystem zum Hochladen von Inhalt, der mit einer Vielzahl von Stücken audiovisueller Daten konfiguriert ist, die in einer Inhaltssendevorrichtung (3) gehalten sind, über ein Netzwerk an eine Inhaltsempfangsvorrichtung (2) verwendet wird, wobei der Inhalt zusammen mit Clip-Informationen, die Verwaltungsinformationen über die audiovisuellen Daten sind, und Inhaltswiedergabe-Steuerinformationen zum Spezifizieren einer Wiedergabesequenz der audiovisuellen Daten gesendet wird,
wobei das Inhaltshochladeverfahren in der Inhaltsempfangsvorrichtung (2) umfasst:
Empfangen einer Inhaltshochladeanforderung;
Erzeugen von Inhaltskennungsinformationen und Inhaltszielortinformationen in Reaktion auf die empfangene Inhaltshochladeanforderung; und
Senden der erzeugten Inhaltskennungsinformationen und der erzeugten Inhaltszielortinformationen; wobei
das Inhaltshochladeverfahren in der Inhaltsempfangsvorrichtung (2) umfasst:
Senden der Inhaltshochladeanfrage;
Empfangen der Inhaltskennungsinformationen und der Inhaltszielortinformationen;
Erzeugen jeweils eines Zielort-URI der Inhaltswiedergabe-Steuerinformationen, eines Zielort-URI der Clip-Informationen und eines Zielort-URI der audiovisuellen Daten in einem spezifizierten Format durch Kombinieren der empfangenen Inhaltskennungsinformationen und der empfangenen Inhaltszielortinformationen entsprechend einer vorbestimmten Erzeugungsregel; und
Senden der gespeicherten audiovisuellen Daten, der Clip-Informationen und der Inhaltswiedergabe-Steuerinformationen zu dem durch den jeweiligen Zielort-URI angezeigten Zielort.

## Revendications

1. Système de téléchargement de contenu pour un téléchargement de contenu configuré avec une pluralité de composants de données audiovisuelles stockées sur un dispositif de transmission de contenu (3) vers un dispositif de réception de contenu (2) via un réseau, dans lequel le contenu est transmis avec des informations rattachées qui sont des informations de gestion portant sur les données audiovisuelles et informations de contrôle de lecture de contenu pour une spécification d'une séquence de lecture des données audiovisuelles, le système de téléchargement de contenu comprenant :
le dispositif de réception de contenu (2) comprenant :
un premier récepteur (11) pour une réception d'une demande de téléchargement de contenu ;
un premier contrôleur (12) pour une génération d'informations d'identificateur de contenu et d'informations de destination de contenu en réponse à la demande de téléchargement de contenu reçue ; et
un premier émetteur (10) pour une transmission des informations d'identificateur de contenu générées et des informations de destination de contenu générées ; et
le dispositif de transmission de contenu (3) comprenant :
un deuxième émetteur (21) pour une transmission de la demande de téléchargement de contenu ;
un deuxième récepteur (20) pour une réception des informations d'identificateur de contenu et des informations de destination de contenu ;
une deuxième mémoire de données audiovisuelles (26) pour un stockage de la pluralité de composants de données audiovisuelles ;
une deuxième mémoire d'informations rattachées (25) pour un stockage des informations rattachées ;
une deuxième mémoire d'informations de contrôle de lecture de contenu (24) pour un stockage des informations de contrôle de lecture de contenu ;
un générateur d'informations d'emplacement de destination (27) pour une génération d'une URI de destination des informations de contrôle de lecture de contenu, d'une URI de destination des informations rattachées et d'une URI de destination des données audiovisuelles dans un format spécifié, respectivement, en combinant les informations d'identificateur de contenu reçues et les informations de destination de contenu reçues conformément à une règle de génération prédéterminée ; et
un deuxième contrôleur (22) pour une signification au deuxième émetteur (21) de transmettre les données audiovisuelles stockées, les informations rattachées et les informations de contrôle de lecture de contenu à la destination indiquée par l'URI de destination respective.

2. Le système de téléchargement de contenu selon la revendication 1, dans lequel,
lorsque le deuxième contrôleur (22) signifie au deuxième émetteur (21) de transmettre les données audiovisuelles stockées, seule une partie des données audiovisuelles désignées par les informations de contrôle de lecture de contenu est transmise.

3. Le système de téléchargement de contenu selon la revendication 1, dans lequel
au moins une partie des informations rattachées et des informations de contrôle de lecture de contenu comprend au moins une d'informations de type de contenu et d'informations d'identification de dispositif de génération de contenu ; et
le premier contrôleur (12) change un d'un style d'affichage du contenu et d'un style de lecture u contenu en réponse à au moins une des informations de type de contenu reçues et des informations d'identification de dispositif de génération de contenu reçues.

4. Le système de téléchargement de contenu selon la revendication 1, dans lequel
le deuxième émetteur (21) transmet au moins une d'informations de type de contenu et d'informations d'identification de dispositif de génération de contenu en tant que la demande de téléchargement de contenu ; et
le premier contrôleur (12) change un d'un style d'affichage du contenu et d'un style de lecture u contenu en réponse à au moins une des informations de type de contenu reçues et des informations d'identification de dispositif de génération de contenu reçues.

5. Le système de téléchargement de contenu selon la revendication 1, dans lequel
un protocole de communication du réseau est conforme à la norme DLNA (Digital living Network Alliance).

6. Dispositif de transmission de contenu dans un système de téléchargement de contenu qui télécharge un contenu configuré avec une pluralité de composants de données audiovisuelles stockées sur le dispositif de transmission de contenu vers un dispositif de réception de contenu (2) via un réseau, dans lequel le contenu est transmis avec des informations rattachées qui sont des informations de gestion portant sur les données audiovisuelles et des informations de contrôle de lecture de contenu pour une spécification d'une séquence de lecture des données audiovisuelles, le dispositif de transmission de contenu comprenant :
un deuxième émetteur (21) pour une transmission d'une demande de téléchargement de contenu ;
un deuxième récepteur (20) pour une réception d'informations d'identificateur de contenu et d'informations de destination de contenu ;
une deuxième mémoire de données audiovisuelles (26) pour un stockage de la pluralité de composants des données audiovisuelles ;
une deuxième mémoire d'informations rattachées (25) pour un stockage des informations rattachées ;
une deuxième mémoire d'informations de contrôle de lecture de contenu (24) pour un stockage des informations de contrôle de lecture de contenu ;
un générateur d'informations d'emplacement de destination (27) pour une génération d'une URI de destination des informations de contrôle de lecture de contenu, une URI de destination des informations rattachées et une URI de destination des données audiovisuelles dans un format spécifié, respectivement, en combinant les informations d'identificateur de contenu reçues et les informations de destination de contenu reçues conformément à une règle de génération prédéterminée ; et
un deuxième contrôleur (22) pour une signification au deuxième émetteur (21) de transmettre les données audiovisuelles stockées, les informations rattachées et les informations de contrôle de lecture de contenu à la destination indiquée par l'URI de destination respective.

7. Le dispositif de transmission de contenu selon la revendication 6, dans lequel,
lorsque le deuxième contrôleur (22) signifie au deuxième émetteur (21) de transmettre les données audiovisuelles stockées, seule une partie de données audiovisuelles désignées par les informations de contrôle de lecture de contenu est transmise.

8. Le système de téléchargement de contenu selon la revendication 6, dans lequel
au moins une des informations rattachées et des informations de contrôle de lecture de contenu comprend au moins une d'informations de type de contenu et d'informations d'identification de dispositif de génération de contenu.

9. Le dispositif transmission de contenu selon la revendication 6, dans lequel
le deuxième émetteur (21) transmet au moins une d'informations de type de contenu et d'informations d'identification de dispositif de génération de contenu en tant que la demande de téléchargement de contenu.

10. Procédé de téléchargement de contenu utilisé dans un système de téléchargement de contenu configuré avec une pluralité de composants de données audiovisuelles stockées sur un dispositif de transmission de contenu (3) vers un dispositif de réception de contenu (2) via un réseau, dans lequel le contenu est transmis avec des informations rattachées qui sont des informations de gestion portant sur les données audiovisuelles et informations de contrôle de lecture de contenu pour une spécification d'une séquence de lecture des données audiovisuelles,
le procédé de téléchargement de contenu dans le dispositif de réception de contenu (2) comprenant :
réception d'une demande de téléchargement de contenu ;
génération d'informations d'identificateur de contenu et d'informations de destination de contenu en réponse à la demande de téléchargement de contenu reçue ; et
transmission des informations d'identificateur de contenu générées et des informations de destination de contenu générées ; et
le procédé de téléchargement de contenu dans le dispositif de réception de contenu (2) comprenant :
transmission de la demande de téléchargement de contenu ;
réception des informations d'identificateur de contenu et des informations de destination de contenu ;
génération d'une URI de destination des informations de contrôle de lecture de contenu, une URI de destination des informations rattachées et d'une URI de destination des données audiovisuelles dans format spécifié, respectivement, en combinant les informations d'identificateur de contenu reçues et les informations de destination de contenu reçues conformément à une règle de génération prédéterminée ; et
transmission des données audiovisuelles stockées, des informations rattachées et des informations de contrôle de lecture de contenu à la destination indiquée par l'URI de destination respective.
